(19)

Europäisches Patentamt
European Patent Office
Office européen des brevets

(11) **EP 4 252 981 A1**

(12) **EUROPEAN PATENT APPLICATION**
published in accordance with Art. 153(4) EPC

(43) Date of publication:
**04.10.2023 Bulletin 2023/40**

(21) Application number: **21897440.0**

(22) Date of filing: **02.09.2021**

(51) International Patent Classification (IPC):
**B25J 19/06** (2006.01)    **G01L 5/00** (2006.01)

(52) Cooperative Patent Classification (CPC):
**B25J 19/06; G01L 5/00**

(86) International application number:
**PCT/JP2021/032243**

(87) International publication number:
**WO 2022/113462 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.11.2020  JP 2020196932**

(71) Applicant: **Nachi-Fujikoshi Corp.
Tokyo 105-0021 (JP)**

(72) Inventor: **KURAMATA Yasuhiko
Toyama-shi, Toyama 930-8511 (JP)**

(74) Representative: **Plougmann Vingtoft a/s
Strandvejen 70
2900 Hellerup (DK)**

(54) **FORCE DETECTION DEVICE AND ROBOT SYSTEM**

(57)    The present invention relates to a force detection device and a robot system. A control device (14) serving as the force detection device includes: a measuring member (42) measuring a force acting on an articulated axes (20a) using a force sensor (26); an estimator (44) estimating the forces acting on the articulated axes (20a) and (20b) based on the state quantity indicative of the driving state of a servo motor (22); and a corrector (46) correcting the estimated value obtained through the estimation by the estimator (44). For the articulated axis (20a) provided with the force sensor (26), the control device (14) determines, as the detection value of the force, the measured value obtained through the measurement performed by the measuring member (42), whereas for the articulated axis (20b) not provided with the force sensor (26), it determines, as the detection value of the force, the estimated value corrected by the corrector (46).

*FIG.2*

EP 4 252 981 A1

## Description

Technical Field

The present invention relates to a force detection device and a robot system.

Background Art

For example, in the technical field of industrial robots, there are known collaborative robots that perform tasks in collaboration with operators. This type of robot requires control to stop itself as necessary when physical interference with the operator is detected. In this regard, various technologies have been proposed to detect an external force acting on a robot with high accuracy using a force sensor attached to an articulated axis of the robot (see, for example, Patent Documents 1 and 2).

Citation List

Patent Literature

Patent Literature 1: Japanese Patent Application Publication No. 2012-176465
Patent Literature 2: Japanese Patent Application Publication No. 2020-104249

Summary of Invention

Technical Problem

From the viewpoint of detection accuracy, it is desirable to install force sensors on all articulated axes included in the robot. However, increasing the number of force sensors installed causes a problem that the cost of an device therewith increases accordingly.

The present invention has been made in view of the problems described above, and an object of the present invention is to provide a force detection device and a robot system that can suppress the reduction in the detection accuracy of a force acting on a robot while decreasing the number of force sensors installed.

Solution to Problem

A force detection device according to a first aspect of the present invention is to detect a force acting on a robot, the robot including a plurality of articulated axes and a plurality of actuators connected to the respective articulated axes, the force detection device including: a measuring member measuring a force acting on the articulated axis using a force sensor; an estimator estimating a force acting on the articulated axis based on a state quantity indicative of a driving state of the actuator; and a corrector correcting an estimated value obtained through the estimation performed by the estimator, wherein for a first articulated axis provided with the force sensor among the plurality of articulated axes, a measured value obtained through the measurement performed by the measuring member is determined as a detection result of the force, and wherein for a second articulated axis not provided with the force sensor among the plurality of articulated axes, an estimated value corrected by the corrector is determined as a detection result of the force.

In the force detection device according to a second aspect of the present invention, the corrector corrects the estimated value in the second articulated axis using a difference amount between the measured value and the estimated value in the first articulated axis.

In the force detection device according to a third aspect of the present invention, the estimator estimates respective forces acting on the first articulated axis and the second articulated axis in accordance with a common estimation model.

In the force detection device according to a fourth aspect of the present invention, the difference amount is calculated by a statistical process regarding a set of difference amounts corresponding to two or more first articulated axes.

In the force detection device according to a fifth aspect of the present invention, when the plurality of articulated axes is connected in series, the corrector corrects the estimated value in the second articulated axis using the difference amount in a first articulated axis located upstream or downstream of and closest to the second articulated axis.

A robot system according to a sixth aspect of the present invention includes: a robot including a plurality of articulated axes and a plurality of actuators connected to the respective articulated axes; and the force detection device according to any one of the first to fifth aspects.

Advantageous Effect of Invention

According to the present invention, the reduction in the detection accuracy of a force acting on the robot can be suppressed while decreasing the number of force sensors installed.

Brief Description of Drawings

[Figure 1] FIG. 1 is an entire configuration diagram of a robot system in which a control device is incorporated as a force detection device in one embodiment of the present invention.
[Figure 2] FIG. 2 is a functional block diagram of the robot system shown in FIG. 1.
[Figure 3] FIG. 3 is a flowchart regarding an operation of the control device shown in FIG. 2.

[Figure 4] FIG. 4 is a diagram showing an example of a torque detection method.

Description of Embodiments

Hereinafter, embodiments of the present invention will be described with reference to the accompanying drawings. To make the understanding of the description easier, the same components are denoted by the same reference character as much as possible through each drawing, and a duplicated description thereof is omitted.

[Configuration of Robot System 10]

<Entire Configuration>

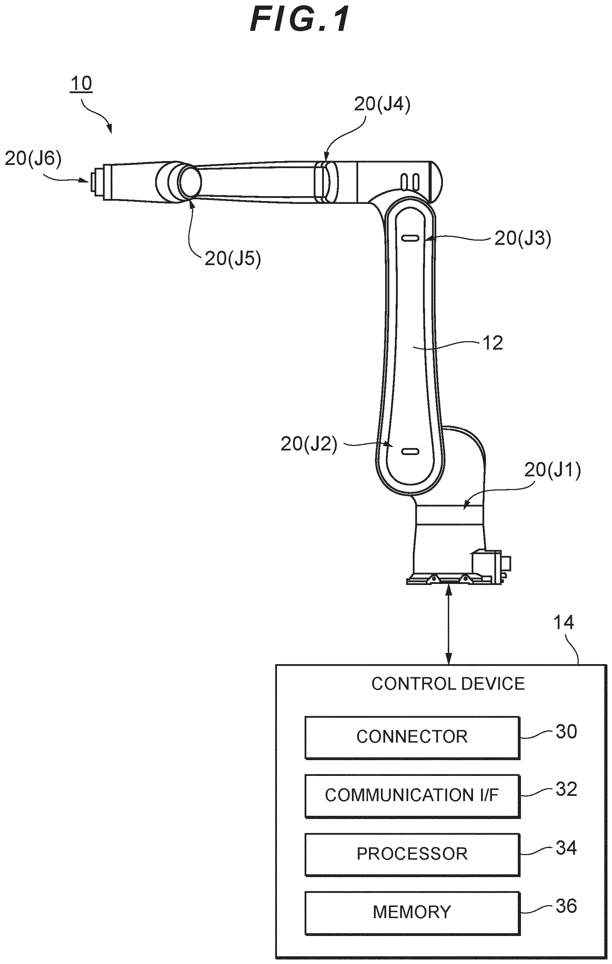

FIG. 1 is an entire configuration diagram of a robot system 10 in which a control device 14 is incorporated as a force detection device in one embodiment of the present invention. The robot system 10 is a system where a robot 12 and an operator perform tasks in collaboration with each other. Specifically, the robot system 10 includes the robot 12 and the control device 14 that controls the driving of the robot 12.

The robot 12 is a vertically articulated robot having a plurality of articulated axes 20. In an example shown in FIG. 1, the robot 12 has a turning axis (J1 axis) that rotates a body part, a lower arm axis (J2 axis) that moves the body part back and forth, an upper arm axis (J3 axis) that moves an arm part up and down, a wrist turning axis (J4 axis) that rotates the arm part, a "wrist bending axis" (J5 axis) that swings a wrist up and down, and a wrist rotation axis (J6 axis) that rotates the wrist. An end effector (not shown) is mounted onto the hand of the robot 12.

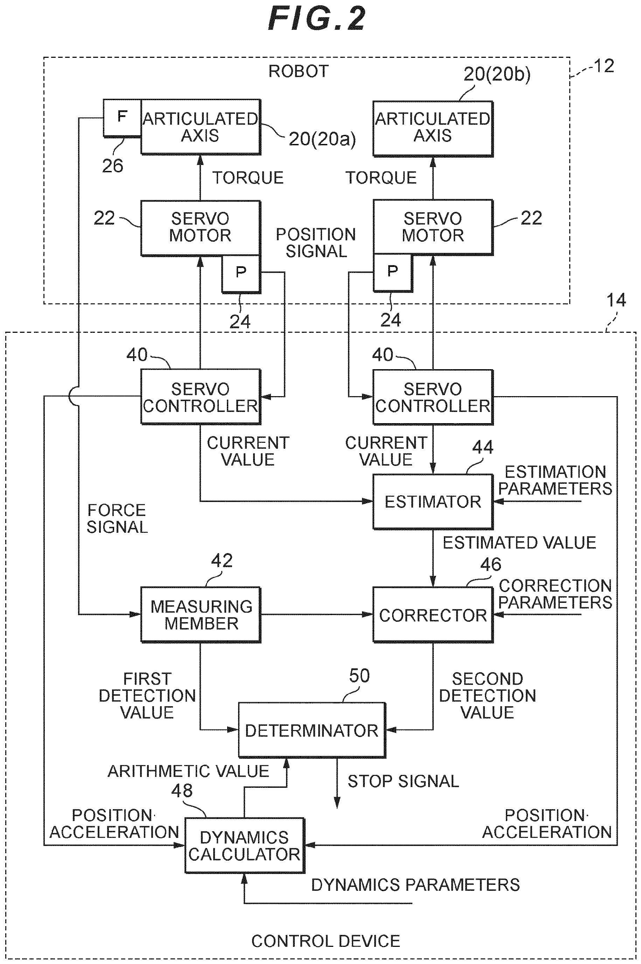

Servo motors 22 (FIG. 2) that perform rotational driving through servo control are connected to the respective articulated axes 20. The robot 12 can perform various tasks including grasping and moving of workpieces, welding, and painting by independently driving the plurality of articulated axes 20 in response to a command given by the control device 14.

The control device 14 is a computer that controls the robot 12. Specifically, the control device 14 includes a connector 30, a communication I/F 32, a processor 34, and a memory 36. The number of each type of component is one in an example of FIG. 1, but may be two or more.

The connector 30 is a terminal for electrical connection with the robot 12 via a power cable or communication cable (both not shown). Thus, the control device 14 supplies electric power and control signals to the robot 12 and acquires measurement signals from various sensors provided in the robot 12.

The communication I/F 32 is an interface for communication with external devices. Thus, the control device 14 can exchange data with, for example, a programming pendant, a work terminal, or a higher-level device (all not shown).

The processor 34 may be a general-purpose processor including a CPU (Central Processing Unit) or a dedicated processor including an FPGA (Field Programmable Gate Array) or GPU (Graphics Processing Unit). The memory 36 is a non-transitory storage medium and stores programs and data necessary for the processor 34 to control each component.

<Functional Block Diagram>

FIG. 2 is a functional block diagram of the robot system 10 shown in FIG. 1. The robot 12 includes the articulated axes 20 described above, the servo motors 22, position sensors 24, and a force sensor 26. The control device 14 includes servo controllers 40, a measuring member 42, an estimator 44, a corrector 46, a dynamics calculator 48, and a determinator 50.

The servo motor 22 is a rotary actuator that rotates the articulated axis 20. The position sensor 24 outputs a detection signal indicative of an angular position of the servo motor 22 (hereinafter referred to as a "position signal"). The force sensor 26 outputs a detection signal indicative of the magnitude of the force acting on the articulated axis 20 (hereinafter referred to as a "force signal").

The force sensors 26 are provided only in n ($1 \leq n < N$) of N ($N \geq 2$) articulated axes 20. Hereinafter, the articulated axes 20 may be denoted by different reference characters depending on the presence or absence of installation of the force sensor 26. Specifically, an articulated axis provided with the force sensor 26 is denoted by an "articulated axis 20a", while an articulated axis not provided with the force sensor 26 is denoted by an "articulated axis 20b".

The servo controller 40 controls the driving of the servo motor 22 based on the position signal from the position sensor 24 (or an encoder). For example, PWM (Pulse Width Modulation), in which the current flowing through the servo motor 22 is used as a control amount, is used for the control of driving.

The measuring member 42 measures the force acting on the articulated axis 20a using the force sensor 26. For example, the measuring member 42 converts the force signal from the force sensor 26 into a measured value of the force acting on the articulated axis 20a by referring to the detection characteristics of the known force sensor 26. For the articulated axis 20a provided with the force sensor 26, the measured value obtained through the measurement performed by the measuring member 42 is determined as the detection result of the force (hereinafter also referred to as a "first detection value").

The estimator 44 estimates the forces acting on the articulated axes 20a and 20b based on the respective state quantities indicative of the driving states of the servo motors 22. The "state quantity" refers to a physical quantity that has a relatively high correlation with the force, and is, for example, a current or voltage. The state quantity may be an actually measured value or a control command value for the servo motor 22. The estimator 44 estimates the respective forces acting on the articulated axes 20a and 20b in accordance with an estimation model specified by estimation parameters. The estimation model is, for example, a model common to a plurality of articulated axes 20, and describes an arithmetic rule in which the torque generated by the servo motor 22 is proportional to the magnitude of the current (hereafter, the current value). Note that the "common model" means that the formula types of the model functions are the same or similar, and also includes the cases where they are different in the multiplier or constant.

The corrector 46 corrects the estimated value obtained through the estimation performed by the estimator 44 in accordance with the arithmetic rule specified by correction parameters. The corrector 46 corrects the estimated value in the articulated axis 20b using a difference amount between the measured value and the estimated value in the articulated axis 20a. The difference amount may be a difference between the measured value and the estimated value or a ratio of the measured value to the estimated value. For the articulated axis 20b not provided with the force sensor 26, the estimated value corrected by the corrector 46 is determined as the detection result of the force (hereinafter also referred to as a "second detection value").

When two or more force sensors 26 are provided in the robot 12, the corrector 46 corrects the estimated value in the articulated axis 20b using the difference amount in all or part of two or more articulated axes 20a. In this case, the difference amount may be calculated by a statistical process regarding a set of difference amounts corresponding to the plurality of articulated axes 20a. This amount of statistics may be any one of the mean, maximum, minimum, mode, and median. When the plurality of articulated axes 20 are connected in series, the corrector 46 corrects the estimated value in the articulated axis 20b using the difference amount in the articulated axis 20a located upstream or downstream of and closest to the articulated axis 20b. Alternatively, the difference amount may be calculated by a statistical process based on a weighted sum of difference amounts corresponding to the plurality of articulated axes 20a. This weighting factor may be set, for example, to a larger value as the positions of the articulated axes 20 are closer to each other and to a smaller value as the positions of the articulated axes 20 are farther from each other.

The dynamics calculator 48 dynamically calculates the forces acting on the articulated axis 20a and the articulated axis 20b due to the robot 12's own weight or its own motion using the position information and dynamics parameters of the servo motor 22. The position information includes the position, velocity, acceleration, jerk, etc., specified from the position signal or its temporal change. Dynamics parameters include the distance and crossing angle between the articulated axes 20, and the mass, the position of the center of gravity, and the inertia of the arm and the end effector. This parameter may be set in advance at the time of shipment from a factory, or it may be set by system manufacturers or users of the robot 12. An arithmetic value, which has been determined by the calculation, is the force that acts on the robot 12 during a normal operation under conditions where no interference with external objects (including operators) occurs, and it corresponds to the reference value in the determination performed by the determinator 50.

The determinator 50 determines whether or not the robot 12 interferes with an external object using [1] the first detection value from the measuring member 42 and the arithmetic value from the dynamics calculator 48, or [2] the second detection value from the corrector 46 and the estimated value from the dynamics calculator 48. For example, the determinator 50 regards a value obtained by subtracting the arithmetic value from the detected value as an "external force" and determines whether or not this external force exceeds a threshold value. If the external force exceeds the threshold value, the determinator 50 determines that the robot 12 has interfered with an external object and outputs a stop signal for stopping the driving of the servo motor 22, to the corresponding servo controller 40 or a brake mechanism (not shown).

[Operation of Control Device 14]

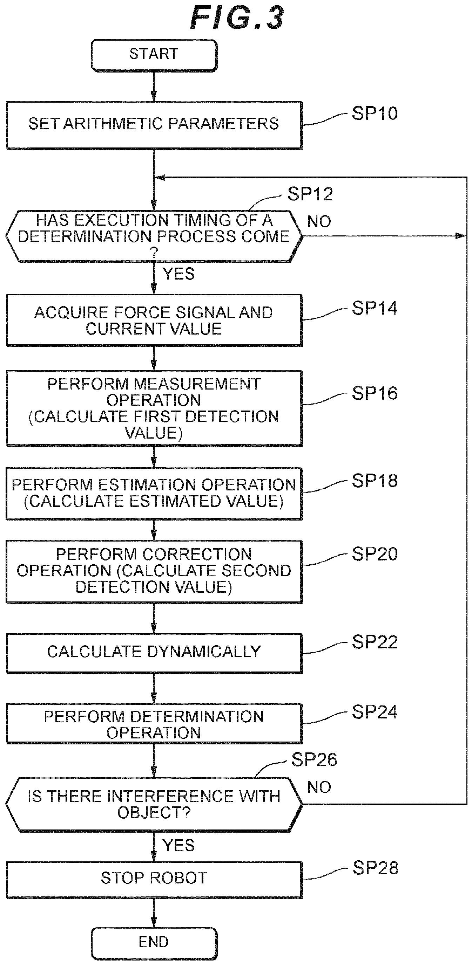

The robot system 10 of this embodiment is configured as described above. Subsequently, the operation of the control device 14, which constitutes a part of this robot system 10, will be described below with reference to the flowchart of FIG. 3.

In step SP10 of FIG. 3, the processor 34 of the control device 14 sets arithmetic parameters. As a result, the estimation parameters are set in the estimator 44, the correction parameters are set in the corrector 46, and the dynamics parameters are set in the dynamics calculator 48. The estimation parameters correspond to M, L, and R in Equation (1) to be mentioned later. The correction parameters correspond to parameters to specify F in Equation (2) to be mentioned later. These parameters are pre-identified (i.e., optimized) for each articulated axis 20 by executing calibration.

In step SP12, the processor 34 of the control device 14 confirms whether execution timing of a determination process has come or not. If the execution timing has not come yet (step SP12: NO), the operation remains in step SP12 until this timing comes. On the other hand, if the execution timing has come (step SP12: YES), the operation proceeds to a next step SP14.

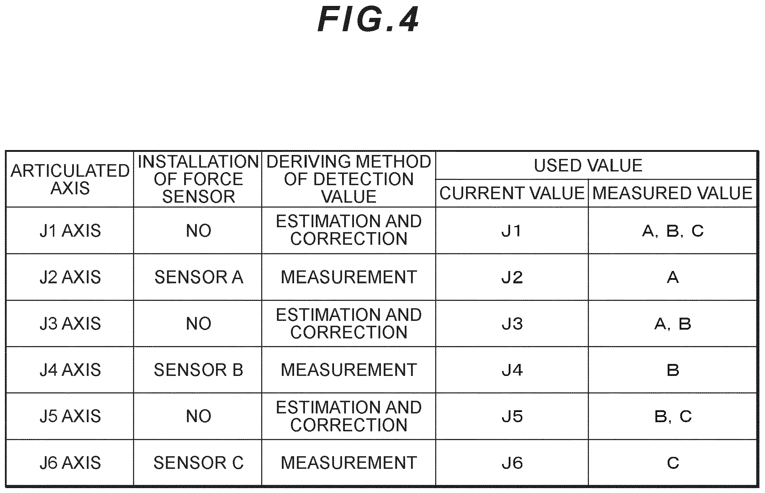

FIG. 4 is a diagram showing an example of a torque detection method. Here, it is assumed that the number of articulated axes 20 is N = 6, and the number of force sensors 26 is n = 3, and that the force sensor 26 is provided every other axis of the J1 to J6 axes. Specifically, the sensor A is provided in the J2 axis, the sensor B is provided in the J4 axis, and the sensor C is provided in the J6 axis. For an even-numbered articulated axis 20a, the first detection value is derived by measurement. Meanwhile, for an odd-numbered articulated axis 20b, the second detection value is derived by estimation and correction.

In step SP14 of FIG. 3, the measuring member 42 acquires the force signals corresponding to the J2, J4, and J6 axes from the force sensors 26 provided in the robot 12. In conjunction with this, the estimator 44 acquires, from the servo controller 40, control command values of the current (hereinafter referred to as "current values") corresponding to the J1 to J6 axes.

In step SP16, the measuring member 42 measures torques acting on the J2, J4, and J6 axes using the force signals acquired in step SP14. Then, the measuring member 42 supplies measured values (= Tm) obtained by the measurement to the corrector 46 and the determinator 50 as the first detection values.

In step SP18, the estimator 44 estimates a torque acting on each of the J1 to J6 axes using the current values acquired in step SP14. The estimated value of the torque is determined in accordance with an estimation model shown in Equation (1) below.

$$Te = I \times M \times L \times R \quad \cdots (1)$$

where Te corresponds to an estimated value of the torque (unit: N·m). I corresponds to the current value (unit: A). M corresponds to the torque constant of the servo motor 22 (unit: N.m/A). L corresponds to the mechanical loss factor (dimensionless quantity). R corresponds to the reduction ratio (dimensionless quantity).

In step SP20, the corrector 46 corrects the estimated values in the J1, J3, and J5 axes obtained in step SP18. The estimated value of the torque is corrected in accordance with Equation (2) below.

$$Tc = Te \times F(\{\Delta\}) \quad \cdots (2)$$

where Tc corresponds to the corrected estimated value (unit: N·m). {Δ} corresponds to the population of torque ratios (= Te/Tm) in the J2, J4, and J6 axes. F(·) is a function that returns the mean of the torque ratios belonging to the population. The sample size used to calculate the mean may be three in total or may be two or less.

In an example of FIG. 4, in the J1 axis located the most upstream of the six axes, the measured values of all the sensors A, B, and C are used. Increasing the sample size of the population using all torque ratios may improve robustness of the torque ratios and suppress variations in detection accuracy. Meanwhile, in each of the other J3 and J5 axes, only the measured values of the sensors located upstream and downstream of and closest to the axis are used. Specifically, the measured values of the sensors A and B are used in the J3 axis, and the measured values of the sensors B and C are used in the J5 axis. By using only the torque ratio between adjacent articulated axis 20a, the detection accuracy may be further improved.

In step SP22, the dynamics calculator 48 dynamically calculates the torque Td acting on each of the articulated axes 20a and 20b using the position information and dynamics parameters of the servo motors 22, assuming a situation in which no interference occurs between the robot 12 and the external object.

In step SP24, the determinator 50 determines whether or not the robot 12 interferes with the external object using the detection value obtained in step SP16 or SP20 and the arithmetic value acquired in step SP22. Specifically, the determinator 50 determines that "there is interference" when a value obtained by subtracting the arithmetic value (Td) from the detection value (Tm, Tc) exceeds the threshold value, and determines that "there is no interference" when the value is less than or equal to the threshold value.

In step SP26, the determinator 50 confirms whether or not there is any interference with the external object. If there is no interference (step SP26: NO), the operation returns to step SP12, and then repeats the processes of steps SP12 to SP26. On the other hand, if there is interference (step SP26: YES), the operation proceeds to a next step SP28.

In step SP28, the determinator 50 outputs the stop signals, which instruct the servo motor 22 to stop, to all the servo controllers 40. Thus, the brake is activated, causing the robot 12 to stop operating. Thereafter, the operator operates a recovery switch (not shown) to release the brake, causing the robot 12 to restart its operation.

[Summary of Embodiment]

As described above, the robot system 10 includes: the robot 12 including the plurality of articulated axes 20 and a plurality of actuators (here, the servo motors 22) connected to the respective articulated axes 20; and the force detection device (here, the control device 14) that detects the external force acting on the robot 12. The control device 14 includes the measuring member 42 that measures the force acting on the articulated axis 20 using the force sensors 26, the estimator 44 that estimates the force acting on the articulated axis 20 based on the state quantity indicative of the driving state of the servo motor 22; and the corrector 46 that corrects the estimated value obtained through the estimation performed by the estimator 44.

Then, for the first articulated axis provided with the force sensor 26 (i.e., the articulated axis 20a), the control device 14 determines, as the detection result of the force, the measured value obtained through the measurement by the measuring member 42. Meanwhile, for the second articulated axis not provided with the force sensor 26 (i.e., the articulated axis 20b), the control device 14 determines, as the detection result of the force, the estimated value corrected by the corrector 46.

In this way, regarding the articulated axis 20b not provided with the force sensor 26, the estimation accuracy of the force acting on the articulated axis 20b is improved not only by performing the estimation based on the state quantity of the servo motor 22, but also by further correcting the estimated value. Thus, the reduction in the detection accuracy of the force acting on the robot 12 is suppressed while decreasing the number of installation of the force sensors 26.

The corrector 46 may correct the estimated value in the articulated axis 20b using a difference amount between the measured value and the estimated value in the articulated axis 20a. The relationship of the error between the measured value and the estimated value in the articulated axis 20a is reflected in the correction of the estimated value in the articulated axis 20b, so that the detection accuracy of the force in the articulated axis 20b is further improved.

Further, the estimator 44 may estimate the respective forces acting on the articulated axes 20a and 20b in accordance with the common estimation model. This enables the appropriate correction of the tendency of the error specific to the estimation model, further improving the detection accuracy of the force in the articulated axis 20b.

The difference amount may be calculated by a statistical process regarding a set of difference amounts corresponding to two or more articulated axes 20a. Thus, the robustness of the difference amount is enhanced, and variations in detection accuracy are suppressed.

In a case where the plurality of articulated axes 20 is connected in series, the corrector 46 may correct the estimated value in the articulated axis 20b using the difference amount in the articulated axis 20a located upstream or downstream of and closest to the articulated axis 20b. By using the difference amount between adjacent articulated axes 20a, the detection accuracy of the force in the articulated axis 20b may be further improved.

[Modification]

It is apparent that the present invention is not limited to the above-mentioned embodiments and can be modified with high flexibility without departing from the gist of the present invention. Alternatively, the respective configurations may be combined arbitrarily to the extent that they are not technically inconsistent. Further, alternatively, the order of execution of the respective steps in the flowchart may be changed to the extent that it is not technically inconsistent.

In the above embodiments, the case of driving the articulated axes 20 using the servo motors 22 has been described, but the type of the actuator is not limited thereto. For example, a rotary actuator other than a servo motor, a linear actuator, or a combination of these may be used.

In the above embodiments, a case where the force sensor 26 is provided every other axis of the J1 to J6 axes has been described, but the number of installation and the arrangement distribution, ratio, etc., of the force sensors 26 are not limited thereto. All the articulated axes provided with the force sensors 26 are classified as the "first articulated axes", but some of these articulated axes may be classified as the "second articulated axes". For example, this may apply when the reliability of the measurement results is assumed to deteriorate due to a failure or impaired performance of the force sensors 26.

In the above embodiments, a case in which the estimated value is calculated in accordance with Equation (1) has been described, but various estimation models, which are different from this equation, may be used. In addition, in the above embodiments, a case in which the estimated value is corrected in accordance with Equation (2) has been described, but various correction formulas, which are different from this equation, may be used. For example, a temperature sensor may be provided around the position sensor 24 or force sensor 26, and a temperature compensation function may be incorporated in the above-mentioned estimation or correction.

In the above embodiments, a case in which the derivation of the detection values (steps SP16 and SP20 in FIG. 3) and the calculation of the arithmetic value (step SP22 in FIG. 3) are performed synchronously has been described, but these arithmetic processes may be performed asynchronously. Specifically, by excluding step SP22 from the flowchart of FIG. 3, the determinator 50 may determine the presence or absence of interference using the most recently arithmetic value.

In the above embodiments, a case where the force detection device is provided integrally with the control device 14 of the robot 12 has been described, but the device configuration is not limited thereto. For example, the force detection device may be a computer separate from the control device or may be integrally provided with the robot.

In the above embodiments, a 6-axis vertically articulated robot has been described by way of example, but the type of robot 12 is not limited thereto. For example, the robot 12 may be any one of a 7-axis robot, a horizontal articulated robot (so-called SCARA robot), a parallel link robot, and an orthogonal robot (so-called gantry robot). The present invention is not limited to industrial robots and can be applied to various mobile devices with a plurality of articulated axes 20.

[Reference Signs List]

10···Robot system, 12···Robot, 14···Control device (force detection device), 20, 20a, 20b···Articulated axis, 22···Servo motor (actuator), 24···Position sensor, 26···Force sensor, 40···Servo controller, 42···Estimator, 44···Measuring member, 46···Corrector, 48···Dynamics calculator, 50···Determinator

**Claims**

1. A force detection device for detecting a force acting on a robot, the robot comprising a plurality of articulated axes and a plurality of actuators connected to the respective articulated axes, the force detection device comprising:

   a measuring member measuring a force acting on the articulated axis using a force sensor;
   an estimator estimating the force acting on the articulated axis based on a state quantity indicative of a driving state of the actuator; and
   a corrector correcting an estimated value obtained through the estimation performed by the estimator,
   wherein for a first articulated axis provided with the force sensor among the plurality of articulated axes, a measured value obtained through the measurement performed by the measuring member is determined as a detection result of the force, and
   wherein for a second articulated axis not provided with the force sensor among the plurality of articulated axes, an estimated value corrected by the corrector is determined as a detection result of the force.

2. The force detection device according to claim 1, wherein the corrector corrects the estimated value in the second articulated axis using a difference amount between the measured value and the estimated value in the first articulated axis.

3. The force detection device according to claim 2, wherein the estimator estimates respective forces acting on the first articulated axis and the second articulated axis in accordance with a common estimation model.

4. The force detection device according to claim 2 or 3, wherein the difference amount is calculated by a statistical process regarding a set of difference amounts corresponding to two or more first articulated axes.

5. The force detection device according to any one of claims 2 to 4, wherein, when the plurality of articulated axes are connected in series, the corrector corrects the estimated value in the second articulated axis using the difference amount in a first articulated axis located upstream or downstream of and closest to the second articulated axis.

6. A robot system comprising:

   a robot including a plurality of articulated axes and a plurality of actuators connected to the respective articulated axes; and
   the force detection device according to any one of claims 1 to 5.

# FIG.1

# FIG.2

# FIG.3

START

SET ARITHMETIC PARAMETERS — SP10

HAS EXECUTION TIMING OF A DETERMINATION PROCESS COME ? — SP12 · NO

YES

ACQUIRE FORCE SIGNAL AND CURRENT VALUE — SP14

PERFORM MEASUREMENT OPERATION (CALCULATE FIRST DETECTION VALUE) — SP16

PERFORM ESTIMATION OPERATION (CALCULATE ESTIMATED VALUE) — SP18

PERFORM CORRECTION OPERATION (CALCULATE SECOND DETECTION VALUE) — SP20

CALCULATE DYNAMICALLY — SP22

PERFORM DETERMINATION OPERATION — SP24

IS THERE INTERFERENCE WITH OBJECT? — SP26 · NO

YES

STOP ROBOT — SP28

END

# FIG.4

| ARTICULATED AXIS | INSTALLATION OF FORCE SENSOR | DERIVING METHOD OF DETECTION VALUE | USED VALUE | |
|---|---|---|---|---|
| | | | CURRENT VALUE | MEASURED VALUE |
| J1 AXIS | NO | ESTIMATION AND CORRECTION | J1 | A, B, C |
| J2 AXIS | SENSOR A | MEASUREMENT | J2 | A |
| J3 AXIS | NO | ESTIMATION AND CORRECTION | J3 | A, B |
| J4 AXIS | SENSOR B | MEASUREMENT | J4 | B |
| J5 AXIS | NO | ESTIMATION AND CORRECTION | J5 | B, C |
| J6 AXIS | SENSOR C | MEASUREMENT | J6 | C |

EP 4 252 981 A1

## INTERNATIONAL SEARCH REPORT

International application No.

**PCT/JP2021/032243**

| A. | CLASSIFICATION OF SUBJECT MATTER |
| --- | --- |

*B25J 19/06*(2006.01)i; *G01L 5/00*(2006.01)i
FI: G01L5/00 H; B25J19/06

According to International Patent Classification (IPC) or to both national classification and IPC

| B. | FIELDS SEARCHED |
| --- | --- |

Minimum documentation searched (classification system followed by classification symbols)

G01L5/00-5/28;G01L3/00-3/26;G01L25/00;B25J1/00-B25J21/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2020-104249 A (FANUC LTD.) 09 July 2020 (2020-07-09) paragraphs [0007]-[0060], fig. 1-7 | 1, 6 |
| A | paragraphs [0007]-[0060], fig. 1-7 | 2-5 |
| A | JP 2020-101541 A (PILZ GMBH & CO. KG.) 02 July 2020 (2020-07-02) paragraphs [0040]-[0130], fig. 1-4 | 1-6 |
| A | JP 2020-179483 A (FANUC LTD.) 05 November 2020 (2020-11-05) paragraphs [0008]-[0035], fig. 1-7 | 1-6 |
| A | US 2019/0217464 A1 (UBTECH ROBOTICS CORP.) 18 July 2019 (2019-07-18) paragraphs [0012]-[0077], fig. 1-5 | 1-6 |

☐ Further documents are listed in the continuation of Box C. ☑ See patent family annex.

| * | Special categories of cited documents: | |
| --- | --- | --- |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **11 October 2021** | **26 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/JP2021/032243** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2020-104249 | A | 09 July 2020 | US | 2020/0206919 | A1 | |
| | | | | Paragraphs [0013]-[0086], fig. 1-7 | | | |
| | | | | DE | 102019134488 | A1 | |
| | | | | CN | 111376267 | A | |
| JP | 2020-101541 | A | 02 July 2020 | US | 2020/0198133 | A1 | |
| | | | | paragraphs [0036]-[0097], fig. 1-4 | | | |
| | | | | EP | 3670110 | A1 | |
| | | | | DE | 102018133349 | A1 | |
| | | | | CN | 111347421 | A | |
| JP | 2020-179483 | A | 05 November 2020 | (Family: none) | | | |
| US | 2019/0217464 | A1 | 18 July 2019 | CN | 110053039 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012176465 A

- JP 2020104249 A